# EUROPÄISCHE PATENTANMELDUNG

(11) **EP 3 614 517 A1**
(43) Veröffentlichungstag der Anmeldung: **26.02.2020**
(21) Anmeldenummer: 18189884.2
(22) Anmeldetag: 21.08.2018
(51) Int. Cl.: H02J 1/08, B60L 1/00, H02H 7/26

(54) **VERSORGUNGSSYSTEM ZUR VERSORGUNG MIT ELEKTRISCHER SPANNUNG UND VERFAHREN ZUM BETREIBEN EINES VERSORGUNGSSYSTEMS**

(71) Anmelder: Frauscher Sensortechnik GmbH, 4774 St. Marienkirchen (AT)
(72) Erfinder: Lugschitz, Stefan, 4780 Schärding (AT); Mader, Günther, 4950 Altheim (AT); Thalbauer, Rudolf, 4921 Hohenzell (AT)
(74) Vertreter: Epping - Hermann - Fischer

(57) **Zusammenfassung**

Es wird ein Versorgungssystem (20) zur Versorgung mit elektrischer Spannung angegeben. Das Versorgungssystem (20) umfasst mindestens eine Spannungsversorgung (21), welche eine Spannungsquelle (22) aufweist, und mindestens zwei Verbrauchereinheiten (23). Dabei weisen die Verbrauchereinheiten (23) jeweils einen ersten Eingang (24) und einen zweiten Eingang (25) auf, jede der Verbrauchereinheiten (23) weist einen Schalter (26) auf, welcher zwischen dem jeweiligen ersten und dem jeweiligen zweiten Eingang (24, 25) angeordnet ist, mindestens eine Verbrauchereinheit (23) ist elektrisch mit der Spannungsversorgung (21) gekoppelt, die Verbrauchereinheiten (23) sind elektrisch in Serie geschaltet, und jede der Verbrauchereinheiten (23) ist dazu ausgelegt den jeweils zugehörigen Schalter (26) autark anzusteuern. Außerdem wird ein Verfahren zum Betreiben eines Versorgungssystems (20) angegeben.

## Beschreibung

Es werden ein Versorgungssystem zur Versorgung mit elektrischer Spannung und ein Verfahren zum Betreiben eines Versorgungssystems angegeben.

An ein Versorgungssystem zur Versorgung mit elektrischer Spannung können Verbraucher angeschlossen sein. Die Verbraucher können beispielsweise in Serie entlang einer Versorgungslinie geschaltet sein und können vom Versorgungssystem mit elektrischer Spannung versorgt werden. Zum Beispiel kann es sich bei den Verbrauchern um eine Vielzahl von Sensoren handeln, welche an unterschiedlichen Positionen angeordnet sind. Zum Schutz gegen Ausfälle, die durch Kurzschlüsse oder Spannungseinbrüche entlang der Versorgungslinie auftreten können, weisen viele Versorgungssysteme zwei Versorgungslinien auf. Tritt jedoch in einem der Verbraucher ein Kurzschluss auf, so können ohne zusätzliche Schutzbeschaltung beide Versorgungslinien zusammenbrechen. Somit würden alle mit den Versorgungslinien verbundenen Verbraucher nicht mehr mit Spannung versorgt.

Eine zu lösende Aufgabe besteht darin, ein Versorgungssystem zur Versorgung mit elektrischer Spannung anzugeben, welches einen verbesserten Schutz gegen Ausfälle aufweist.

Die Aufgabe wird durch den Gegenstand des unabhängigen Patentanspruchs gelöst. Vorteilhafte Ausgestaltungen und Weiterbildungen sind in den Unteransprüchen angegeben.

Gemäß zumindest einer Ausführungsform des Versorgungssystems zur Versorgung mit elektrischer Spannung, umfasst das Versorgungssystem mindestens eine Spannungsversorgung, welche eine Spannungsquelle aufweist. Die Spannungsversorgung kann mindestens einen Ausgang aufweisen, welcher dazu eingerichtet ist, dass elektrische Verbraucher angeschlossen werden können. Somit kann die Spannungsversorgung dazu ausgelegt sein elektrische Spannung bereitzustellen. Die Spannungsversorgung kann dazu ausgelegt sein eine vorgebbare Spannung bereitzustellen. Die Spannungsquelle kann zwei Ausgänge aufweisen, von welchen einer elektrisch mit dem Ausgang der Spannungsversorgung verbunden ist und der andere mit Masse. Alternativ können beide Ausgänge der Spannungsquelle elektrisch mit der Spannungsversorgung verbunden sein. Das Versorgungssystem kann in diesem Fall erdfrei betrieben werden.

Das Versorgungssystem umfasst weiter mindestens zwei Verbrauchereinheiten. Die Verbrauchereinheiten können dazu ausgelegt sein mit elektrischer Spannung versorgt zu werden. Bei den Verbrauchereinheiten kann es sich beispielsweise um Sensoren handeln. Die Sensoren können entlang eines zu überwachenden Objekts angeordnet sein. Außerdem können die Sensoren dazu ausgelegt sein Fahrzeuge, welche sich entlang des zu überwachenden Objekts bewegen, zu detektieren. Beispielsweise kann es sich bei dem zu überwachenden Objekt um Gleise handeln, auf welchen sich Züge bewegen. Es ist auch möglich, dass es sich bei den Verbrauchereinheiten um andere elektrische Verbraucher handelt.

Die Verbrauchereinheiten weisen jeweils einen ersten Eingang und einen zweiten Eingang auf. Die Verbrauchereinheiten können jeweils über den ersten Eingang und den zweiten Eingang mit elektrischer Spannung versorgt werden.

Jede der Verbrauchereinheiten weist einen Schalter auf, welcher zwischen dem jeweiligen ersten und dem jeweiligen zweiten Eingang angeordnet ist. Das kann bedeuten, dass der erste Eingang elektrisch mit einer ersten Seite des Schalters verbunden ist und der zweite Eingang elektrisch mit einer zweiten Seite des Schalters verbunden ist, wobei die zweite Seite des Schalters auf einer der ersten Seite des Schalters abgewandten Seite angeordnet ist. Ist der Schalter geschlossen, so können der erste Eingang und der zweite Eingang elektrisch miteinander verbunden sein. Ist der Schalter geöffnet, so sind der erste Eingang und der zweite Eingang nicht über den Schalter elektrisch miteinander verbunden. Bei dem Schalter kann es sich beispielsweise um einen mechanischen oder einen elektronischen Schalter handeln.

Mindestens eine Verbrauchereinheit ist elektrisch mit der Spannungsversorgung gekoppelt. Das kann bedeuten, dass mindestens eine Verbrauchereinheit elektrisch mit der Spannungsversorgung verbunden ist. Beispielsweise kann einer der Eingänge der Verbrauchereinheit elektrisch mit dem Ausgang der Spannungsversorgung verbunden sein. Die mindestens eine Verbrauchereinheit kann über ein Kabel mit der Spannungsversorgung verbunden sein. Es ist weiter möglich, dass jede der Verbrauchereinheiten elektrisch mit der Spannungsversorgung verbunden ist.

Die Verbrauchereinheiten sind elektrisch in Serie geschaltet. Dazu kann beispielsweise der zweite Eingang einer Verbrauchereinheit mit dem ersten Eingang einer weiteren Verbrauchereinheit elektrisch verbunden sein. Somit kann eine Versorgungslinie geformt werden. Die Versorgungslinie kann elektrische Verbindungen zwischen der Spannungsversorgung und den Verbrauchereinheiten aufweisen. Die Versorgungslinie kann beispielsweise eine elektrische Verbindung zwischen der Spannungsversorgung und einem ersten Eingang einer ersten Verbrauchereinheit und die elektrische Verbindung über den Schalter zwischen dem ersten Eingang und dem zweiten Eingang der ersten Verbrauchereinheit aufweisen. Die Versorgungslinie kann weiter elektrische Verbindungen zwischen den übrigen Verbrauchereinheiten aufweisen.

Jede der Verbrauchereinheiten ist dazu ausgelegt den jeweils zugehörigen Schalter autark anzusteuern. Dazu kann jede der Verbrauchereinheiten eine Ansteuerungseinheit aufweisen, welche dazu ausgelegt ist den jeweils zugehörigen Schalter autark anzusteuern. Das kann bedeuten, dass die Ansteuerungseinheit dazu ausgelegt ist, den Schalter derart anzusteuern, dass dieser geschlossen oder geöffnet wird. Die Ansteuerungseinheit kann mit dem Schalter über eine Steuerverbindung verbunden sein. Bei der Steuerverbindung kann es sich um eine mechanische, eine elektrische oder eine drahtlose Verbindung handeln.

Dass jede der Verbrauchereinheiten dazu ausgelegt ist den jeweils zugehörigen Schalter autark anzusteuern kann bedeuten, dass jede der Verbrauchereinheiten ausschließlich Informationen von der jeweiligen Verbrauchereinheit zur Ansteuerung des zugehörigen Schalters verwendet. Jede der Verbrauchereinheiten kann somit dazu ausgelegt sein den jeweils zugehörigen Schalter ausschließlich mit Informationen von der jeweiligen Verbrauchereinheit anzusteuern. Das kann bedeuten, dass das Versorgungssystem dazu ausgelegt ist ohne Kommunikationsverbindungen zwischen den Verbrauchereinheiten betrieben zu werden. Jede der Verbrauchereinheiten kann somit dazu ausgelegt sein den zugehörigen Schalter ohne Informationen von anderen Verbrauchereinheiten anzusteuern. Das Versorgungssystem kann frei von Kommunikationsverbindungen zwischen den Verbrauchereinheiten sein.

Tritt in einer der Verbrauchereinheiten ein Kurzschluss auf, so steigt der Strom entlang der Versorgungslinie stark an und die Spannung ist stark reduziert. Somit können nicht mehr alle Verbrauchereinheiten mit einer vorgebbaren Spannung von der Spannungsversorgung versorgt werden. Dadurch dass jede der Verbrauchereinheiten einen Schalter aufweist, kann durch das Öffnen von Schaltern die Verbrauchereinheit, in welcher ein Kurzschluss auftritt, elektrisch von den anderen Verbrauchereinheiten entkoppelt werden. Werden die Schalter der Verbrauchereinheiten, welche benachbart zu der Verbrauchereinheit mit Kurzschluss angeordnet sind, geöffnet, so können die Verbrauchereinheiten, welche sich näher an der Spannungsversorgung befinden als die betroffene Verbrauchereinheit, weiter mit elektrischer Spannung versorgt werden. Das bedeutet, dass im Fall eines Kurzschlusses in einer der Verbrauchereinheiten nicht zwingend die gesamte Versorgungslinie ausfällt. Lediglich die Verbrauchereinheit, in welcher der Kurzschluss auftritt, und die Verbrauchereinheiten welche weiter entfernt von der Spannungsversorgung angeordnet sind, fallen aus.

Vorteilhafterweise ermöglicht der hier beschriebene Aufbau des Versorgungssystems einen verbesserten Schutz gegenüber Ausfällen mit nur einer Versorgungslinie. Eine zweite Versorgungslinie wird in diesem Fall nicht benötigt. Durch das Öffnen der Schalter der Verbrauchereinheiten, welche benachbart zu der Verbrauchereinheit mit Kurzschluss angeordnet sind, können die Verbrauchereinheiten welche näher an der Spannungsversorgung angeordnet sind, weiter mit Spannung versorgt werden. Da nur eine Versorgungslinie benötigt wird, kann Material für elektrische Leitungen oder Verbindungen eingespart werden.

Ein weiterer Vorteil des hier beschriebenen Versorgungssystems besteht darin, dass durch das Öffnen der Schalter der Verbrauchereinheiten, welche benachbart zu der Verbrauchereinheit mit Kurzschluss angeordnet sind, der auftretende Kurzschluss lokalisiert werden kann. Dies vereinfacht die Reparatur des Versorgungssystems.

Da der Schalter autark von der jeweiligen Verbrauchereinheit angesteuert wird, ist eine Kommunikation zwischen den Verbrauchereinheiten nicht notwendig. Im Fall eines Kurzschlusses wird der jeweils zugehörige Schalter durch die Verbrauchereinheiten geöffnet, welche einen Spannungsabfall detektieren und ein Austausch von Daten zwischen den Verbrauchereinheiten wird nicht benötigt.

Gemäß zumindest einer Ausführungsform des Versorgungssystems weist das Versorgungssystem mindestens eine weitere Spannungsversorgung mit einer weiteren Spannungsquelle auf. Die weitere Spannungsversorgung kann einen ähnlichen oder den gleichen Aufbau wie die Spannungsversorgung aufweisen. Die weitere Spannungsversorgung kann dazu ausgelegt sein elektrische Spannung bereitzustellen. Die elektrische Spannung kann vorgebbar sein. Mindestens eine der Verbrauchereinheiten ist elektrisch mit der weiteren Spannungsversorgung gekoppelt. Das kann bedeuten, dass mindestens eine der Verbrauchereinheiten elektrisch mit der weiteren Spannungsversorgung verbunden ist. Die weitere Spannungsversorgung kann an einer der Spannungsversorgung abgewandten Seite der Versorgungslinie angeordnet sein. Das kann bedeuten, dass die Spannungsversorgung elektrisch mit einer ersten Verbrauchereinheit verbunden ist und dass die weitere Spannungsversorgung elektrisch mit der letzten der in Serie angeordneten Verbrauchereinheiten verbunden ist.

Bei einer Unterbrechung der Versorgungslinie beispielsweise im Bereich einer der elektrischen Verbindungen zwischen den Verbrauchereinheiten, können die Verbrauchereinheiten weiter von der Spannungsversorgung und der weiteren Spannungsversorgung mit elektrischer Spannung versorgt werden. Vorteilhafterweise weist das Versorgungssystem damit einen verbesserten Schutz gegen Ausfälle, insbesondere gegen Unterbrechungen entlang der Versorgungslinie, auf.

Gemäß zumindest einer Ausführungsform des Versorgungssystems wird jeder Schalter ausschließlich durch Informationen der zugehörigen Verbrauchereinheit angesteuert. Das bedeutet, dass jede der Verbrauchereinheiten dazu ausgelegt ist den jeweils zugehörigen Schalter autark anzusteuern. Zur Ansteuerung des Schalters werden keine Informationen von anderen Verbrauchereinheiten benötigt. Somit kann das Versorgungssystem dazu ausgelegt sein ohne Kommunikationsverbindungen zwischen den Verbrauchereinheiten betrieben zu werden. Vorteilhafterweise ist das Versorgungssystem daher robuster gegen Ausfälle und es wird keine Kommunikationsinfrastruktur zwischen den Verbrauchereinheiten benötigt.

Gemäß zumindest einer Ausführungsform des Versorgungssystems weist die Spannungsversorgung eine Strombegrenzung oder eine Leistungsbegrenzung auf. Das kann bedeuten, dass der am Ausgang der Spannungsversorgung auftretende Strom auf einen maximal zulässigen Strom begrenzt wird oder dass die am Ausgang der Spannungsversorgung bereitgestellte Leistung begrenzt wird. Im Fall eines Kurzschlusses in einer der Verbrauchereinheiten steigt der Strom in der Versorgungslinie stark an. Da der an der Spannungsversorgung auftretende Strom durch die Strombegrenzung begrenzt ist, fällt die Spannung entlang der Versorgungslinie stark ab. Eine stark abfallende Spannung kann somit als Indikator für einen vorliegenden Kurzschluss verwendet werden.

Gemäß zumindest einer Ausführungsform des Versorgungssystems sind die Verbrauchereinheiten über elektrisch leitfähige Versorgungsleitungen elektrisch in Serie geschaltet, wobei zwischen zwei Verbrauchereinheiten jeweils eine Versorgungsleitung angeordnet ist. Das bedeutet, dass je zwei Verbrauchereinheiten elektrisch über eine Versorgungsleitung miteinander verbunden sind. Eine erste Verbrauchereinheit kann über eine Versorgungsleitung mit der Spannungsversorgung elektrisch verbunden sein. Eine weitere Verbrauchereinheit kann über eine weitere Versorgungsleitung mit der weiteren Spannungsversorgung elektrisch verbunden sein. Beispielsweise kann der zweite Eingang der ersten Verbrauchereinheit mit dem ersten Eingang einer zweiten Verbrauchereinheit elektrisch über eine Versorgungsleitung verbunden sein. Die Versorgungslinie weist somit die Versorgungsleitungen auf. Vorteilhafterweise wird lediglich eine Versorgungslinie benötigt.

Gemäß zumindest einer Ausführungsform des Versorgungssystems sind jeweils zwei Verbrauchereinheiten über genau eine Versorgungsleitung elektrisch miteinander verbunden. Das bedeutet, dass jeweils zwei Verbrauchereinheiten über nur eine Versorgungsleitung elektrisch miteinander verbunden sind. Bei einer Versorgungsleitung kann es sich um eine elektrische Verbindung mit zwei elektrischen Leitungen handeln. Bei einer der zwei elektrischen Leitungen kann es sich um eine Erdung handeln. Es ist weiter möglich, dass für alle Verbrauchereinheiten zwischen jeweils zwei Verbrauchereinheiten genau eine Versorgungsleitung angeordnet ist. Vorteilhafterweise wird keine zweite Versorgungslinie und auch keine Kommunikationsverbindung zwischen den Verbrauchereinheiten benötigt. Somit können Kosten und Material bei der Herstellung des Versorgungssystems eingespart werden.

Gemäß zumindest einer Ausführungsform des Versorgungssystems weisen die Verbrauchereinheiten jeweils einen induktiven Sensor auf. Bei dem induktiven Sensor kann es sich beispielsweise um einen Radsensor zur Detektion von Rädern von Zügen handeln. Der Radsensor kann an Gleisen angeordnet sein. Außerdem kann der Radsensor dazu ausgelegt sein Räder von Zügen zu detektieren. Die Verbrauchereinheiten können somit Abstände von mehreren Metern oder Kilometern zwischen einander aufweisen. Das Versorgungssystem kann sich über eine Länge von mehreren 100 Metern oder mehreren Kilometern erstrecken. Da im Bereich der Zugdetektion hohe Sicherheitsstandards nötig sind, ist es vorteilhaft, dass das Versorgungssystem einen verbesserten Schutz gegenüber Ausfällen aufweist.

Gemäß zumindest einer Ausführungsform des Versorgungssystems weist jede der Verbrauchereinheiten einen Energiespeicher auf. Bei dem Energiespeicher kann es sich beispielsweise um einen Kondensator handeln. Der Energiespeicher kann elektrisch mit dem ersten Eingang und dem zweiten Eingang der Verbrauchereinheit verbunden sein. Der Energiespeicher kann außerdem elektrisch mit der Ansteuerungseinheit verbunden sein, so dass diese vom Energiespeicher mit elektrischer Spannung versorgt werden kann. Der Energiespeicher kann dazu ausgelegt sein elektrische Ladung zu speichern. Beispielsweise kann der Energiespeicher geladen werden, sobald an den Eingängen der Verbrauchereinheit eine elektrische Spannung anliegt. Des Weiteren kann der Energiespeicher elektrisch mit dem induktiven Sensor verbunden sein. Der Energiespeicher kann dazu ausgelegt sein den induktiven Sensor zumindest zeitweise mit elektrischer Spannung zu versorgen.

Da jede der Verbrauchereinheiten einen Energiespeicher aufweist, können die Verbrauchereinheiten auch für den Fall, dass kurzfristig weniger oder keine Spannung von der Spannungsversorgung bereit gestellt wird, vom jeweiligen Energiespeicher mit Spannung versorgt werden.

Gemäß zumindest einer Ausführungsform des Versorgungssystems sind die ersten Eingänge und die zweiten Eingänge elektrisch mit jeweils einer Diode verbunden. Die Dioden sind so gepolt, dass sie von der Versorgungsleitung zur Verbrauchereinheit in Durchlassrichtung verschaltet sind. Somit wird gewährleistet, dass die Verbrauchereinheiten von der Spannungsversorgung mit Spannung versorgt werden können und dass es keinen Stromfluss von den Verbrauchereinheiten zur Spannungsversorgung gibt. Bei den Dioden kann es sich um Halbleiterdioden handeln.

Gemäß zumindest einer Ausführungsform des Versorgungssystems ist parallel zu jedem Schalter ein Widerstand geschaltet. Bei dem Widerstand handelt es sich um einen Ladewiderstand. Der Widerstand kann einen hohen elektrischen Widerstand aufweisen. Bei geöffnetem Schalter können, falls kein Kurzschluss in der jeweiligen Verbrauchereinheit vorliegt, Eingangskapazitäten der Verbrauchereinheit teilweise geladen werden, so dass der Spannungseinbruch beim Schließen des Schalters begrenzt ist.

Gemäß zumindest einer Ausführungsform des Versorgungssystems weist jede der Verbrauchereinheiten eine Messeinrichtung auf, welche dazu ausgelegt ist, die an der jeweiligen Verbrauchereinheit anliegende Spannung zu bestimmen. Die Messeinrichtung kann beispielsweise dazu ausgelegt sein die an der Verbrauchereinheit anliegende Spannung am ersten Eingang und am zweiten Eingang zu bestimmen. Tritt eine Störung im Versorgungssystem auf, so kann sich die Spannung an der Verbrauchereinheit ändern. Tritt beispielsweise in einer anderen Verbrauchereinheit ein Kurzschluss auf, so verringert sich die Spannung wesentlich und die Schalter der benachbarten Verbrauchereinheiten werden geöffnet.

Gemäß zumindest einer Ausführungsform des Versorgungssystems ist jede der Verbrauchereinheiten dazu ausgelegt den jeweils zugehörigen Schalter in Abhängigkeit von der an der jeweiligen Verbrauchereinheit anliegenden Spannung anzusteuern. Das kann bedeuten, dass der Schalter geöffnet wird, sobald die an der Verbrauchereinheit anliegende Spannung unter einen vorgebbaren Minimalwert fällt. Fällt die anliegende Spannung unter den Minimalwert, so kann in einer der anderen Verbrauchereinheiten ein Kurzschluss vorliegen.

Es ist möglich, dass die Ansteuerungseinheit der Verbrauchereinheit dazu ausgelegt ist den jeweils zugehörigen Schalter in Abhängigkeit von der an der jeweiligen Verbrauchereinheit anliegenden Spannung anzusteuern. Ein Kurzschluss im Versorgungssystem kann zu einem Spannungseinbruch bei mehreren Versorgungseinheiten führen, so dass mehrere Schalter geöffnet werden. Das heißt, dass eine Versorgungseinheit zwischen zwei Versorgungseinheiten angeordnet sein kann, bei welchen die Schalter geöffnet sind. In diesem Fall kann die Versorgungseinheit in der Mitte nicht mehr über die Versorgungsleitung mit Spannung versorgt werden. Sobald die Schalter der beiden benachbarten Verbrauchereinheiten geöffnet sind, kann die Verbrauchereinheit zwischen diesen beiden Verbrauchereinheiten über den Energiespeicher mit elektrischer Spannung versorgt werden. Somit kann die Verbrauchereinheit auch im Falle eines Kurzschlusses in einer anderen Verbrauchereinheit weiter mit Spannung versorgt werden.

Es ist weiter möglich, dass der Schalter wieder geschlossen wird, sobald die an der Verbrauchereinheit anliegende Spannung wieder einen vorgebbaren Schwellwert überschreitet. Dies kann beispielsweise der Fall sein, wenn die Schalter der zwei Verbrauchereinheiten, welche benachbart zu der Verbrauchereinheit mit Kurzschluss angeordnet sind, geöffnet sind und die von der Spannungsversorgung bereitgestellte Spannung wieder ansteigt. Durch das Öffnen der Schalter ist die Verbrauchereinheit mit Kurzschluss vom Versorgungssystem entkoppelt. Das bedeutet, dass die übrigen Verbrauchereinheiten regulär mit Spannung von der Spannungsversorgung versorgt werden können. Weist das Versorgungssystem eine Spannungsversorgung auf, so können alle Verbrauchereinheiten, welche näher an der Spannungsversorgung angeordnet sind als die Verbrauchereinheit, in welcher der Kurzschluss vorliegt, weiter regulär mit Spannung versorgt werden. Weist das Versorgungssystem eine Spannungsversorgung und eine weitere Spannungsversorgung auf, so können alle übrigen Verbrauchereinheiten weiter mit Spannung versorgt werden, für den Fall, dass in einer der Verbrauchereinheiten oder in einer der Versorgungsleitungen ein Kurzschluss vorliegt. Somit weist das Versorgungssystem einen verbesserten Schutz gegenüber Ausfällen auf.

Des Weiteren wird ein Verfahren zum Betreiben eines hier beschriebenen Versorgungssystems angegeben.

Gemäß zumindest einer Ausführungsform des Verfahrens wird für jede Verbrauchereinheit der zugehörige Schalter geöffnet, wenn die an der Verbrauchereinheit anliegende Spannung unterhalb von einem vorgebbaren Minimalwert liegt. Die an der Verbrauchereinheit anliegende Spannung kann beispielsweise unter den Minimalwert fallen, wenn in einer anderen Verbrauchereinheit ein Kurzschluss auftritt. In diesem Fall ist es vorteilhaft die Verbrauchereinheit mit Kurzschluss durch das Öffnen des Schalters der benachbarten Verbrauchereinheit beziehungsweise der Schalter der zwei benachbarten Verbrauchereinheiten zumindest zeitweise vom Versorgungssystem zu entkoppeln. Damit wird ein Einbrechen der Spannung an der Verbrauchereinheit oder am induktiven Sensor der Verbrauchereinheit vermieden. Es ist weiter möglich, dass die an der Verbrauchereinheit anliegende Spannung unter den Minimalwert fällt, wenn in der Versorgungsleitung ein Kurzschluss auftritt. In diesem Fall ist es vorteilhaft die Schalter der Verbrauchereinheiten, welche benachbart zum Kurzschluss angeordnet sind, zu öffnen. Somit können die übrigen Verbrauchereinheiten weiter von der Spannungsversorgung mit Spannung versorgt werden.

Gemäß zumindest einer Ausführungsform des Verfahrens erfolgt die Öffnung des zugehörigen Schalters nach einer vorgebbaren Zeitdauer, wenn die an der Verbrauchereinheit anliegende Spannung unterhalb von einem vorgebbaren Minimalwert liegt. Das kann bedeuten, dass der zugehörige Schalter erst geöffnet wird, wenn die an der Verbrauchereinheit anliegende Spannung über eine vorgebbare Zeitdauer hinweg unterhalb vom Minimalwert liegt. Somit wird ausgeschlossen, dass der Schalter bei kurzzeitigen Spannungsschwankungen geöffnet wird. Kurzzeitige Spannungsschwankungen können entlang der Versorgungslinie auftreten, auch wenn kein Kurzschluss vorliegt. Für diesen Fall wird der zugehörige Schalter erst nach der vorgebbaren Zeitdauer geöffnet, wenn die an der Verbrauchereinheit anliegende Spannung innerhalb dieser Zeitdauer unterhalb vom Minimalwert liegt.

Gemäß zumindest einer Ausführungsform des Verfahrens wird nach dem Öffnen des Schalters der Schalter in vorgebbaren Zeitabständen geschlossen, wenn die an der jeweiligen Verbrauchereinheit anliegende Spannung über einem vorgebbaren Schwellwert liegt. Das kann bedeuten, dass der Schalter geschlossen wird, sobald die an der Verbrauchereinheit anliegende Spannung über dem Schwellwert liegt. Fällt die an der Verbrauchereinheit anliegende Spannung anschließend wieder unter den Minimalwert, so kann der Schalter wieder geöffnet werden. Fällt die an der Verbrauchereinheit anliegende Spannung anschließend nicht wieder unter den Minimalwert, so kann der Schalter geschlossen bleiben. Somit wird ermöglicht, dass die Verbrauchereinheiten, bei welchen kein Kurzschluss vorliegt weiter regulär von der Spannungsversorgung mit Spannung versorgt werden können, sobald die Schalter der Verbrauchereinheiten, welche benachbart zur Verbrauchereinheit mit Kurzschluss angeordnet sind, geöffnet sind.

Im Folgenden werden das hier beschriebene Versorgungssystem und das hier beschriebene Verfahren zum Betreiben eines Versorgungssystems in Verbindung mit Ausführungsbeispielen und den dazugehörigen Figuren näher erläutert.
Die Figuren 1 und 2 zeigen ein Ausführungsbeispiel des Versorgungssystems zur Versorgung mit elektrischer Spannung.
In den Figuren 3, 4 und 5 ist ein weiteres Ausführungsbeispiel des Versorgungssystems gezeigt.
In Figur 6 ist ein Ausführungsbeispiel einer Verbrauchereinheit gezeigt.
Mit Figur 7 wird ein Ausführungsbeispiel des Verfahrens zum Betreiben eines Versorgungssystems beschrieben.

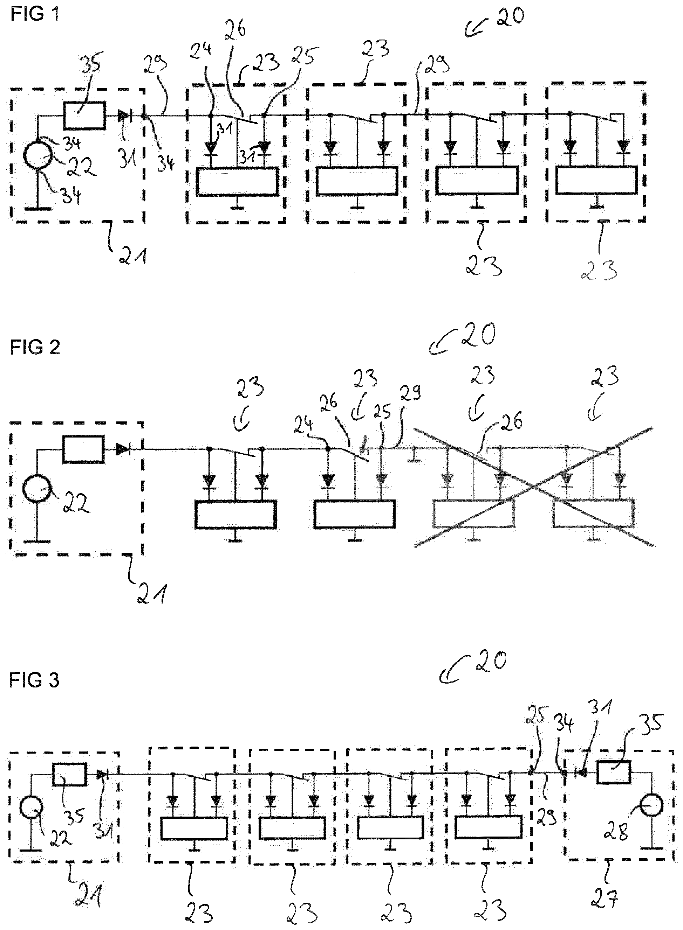

In Figur 1 ist ein Ausführungsbeispiel des Versorgungssystems 20 zur Versorgung mit elektrischer Spannung gezeigt. Das Versorgungssystem 20 umfasst eine Spannungsversorgung 21, welche eine Spannungsquelle 22 aufweist. Die Spannungsquelle 22 weist zwei Ausgänge 34 auf. Einer der Ausgänge 34 ist geerdet und der andere der Ausgänge 34 ist elektrisch mit einer Strombegrenzungseinheit 35 verbunden. Alternativ ist es möglich, dass die Spannungsversorgung 21 anstelle der Strombegrenzungseinheit 35 eine Leistungsbegrenzungseinheit aufweist. Außerdem weist die Spannungsversorgung 21 einen Ausgang 34 auf. Die Strombegrenzungseinheit 35 ist dazu ausgelegt den am Ausgang 34 der Spannungsversorgung 21 auftretenden Strom auf einen maximal zulässigen Strom zu begrenzen. Weist die Spannungsversorgung 21 eine Leistungsbegrenzungseinheit auf, so ist diese dazu ausgelegt, die am Ausgang 34 der Spannungsversorgung 21 auftretende Leistung auf eine maximal zulässige Leistung zu begrenzen. Zwischen der Strombegrenzungseinheit 35 und dem Ausgang 34 der Spannungsversorgung 21 ist eine Diode 31 angeordnet. Die Strombegrenzungseinheit 35 ist elektrisch mit der Diode 31 verbunden und die Diode 31 ist elektrisch mit dem Ausgang 34 der Spannungsversorgung 21 verbunden. Die Diode 31 ist so gepolt, dass sie von der Strombegrenzungseinheit 35 zum Ausgang 34 in Durchlassrichtung verschaltet ist.

Das Versorgungssystem 20 weist weiter mindestens zwei Verbrauchereinheiten 23, in diesem Fall vier Verbrauchereinheiten 23, auf. Die Verbrauchereinheiten 23 sind elektrisch mit der Spannungsversorgung 21 verbunden. Außerdem sind die Verbrauchereinheiten 23 elektrisch in Serie geschaltet. Jede der Verbrauchereinheiten 23 weist einen ersten Eingang 24 und einen zweiten Eingang 25 auf. Der erste Eingang 24 einer der Verbrauchereinheiten 23 ist elektrisch mit dem Ausgang 34 der Spannungsversorgung 21 verbunden. Der erste Eingang 24 einer der Verbrauchereinheiten 23 ist elektrisch über eine Versorgungsleitung 29 mit dem Ausgang 34 der Spannungsversorgung 21 verbunden. Der zweite Eingang 25 dieser Verbrauchereinheit 23 ist elektrisch mit dem ersten Eingang 24 einer weiteren Verbrauchereinheit 23 über eine weitere Versorgungsleitung 29 verbunden. Somit sind die Verbrauchereinheiten 23 in Serie geschaltet, indem zwischen den Verbrauchereinheiten 23 Versorgungsleitungen 29 angeordnet sind. Das bedeutet, dass zwischen zwei Verbrauchereinheiten 23 jeweils eine Versorgungsleitung 29 angeordnet ist. Dabei sind jeweils zwei Verbrauchereinheiten 23 über genau eine Versorgungsleitung 29 elektrisch miteinander verbunden. Vorteilhafterweise wird somit keine zweite Versorgungsleitung 29 zwischen zwei Verbrauchereinheiten 23 benötigt. Eine Versorgungsleitung 29 kann zwei elektrisch leitfähige Kabel oder Drähte aufweisen.

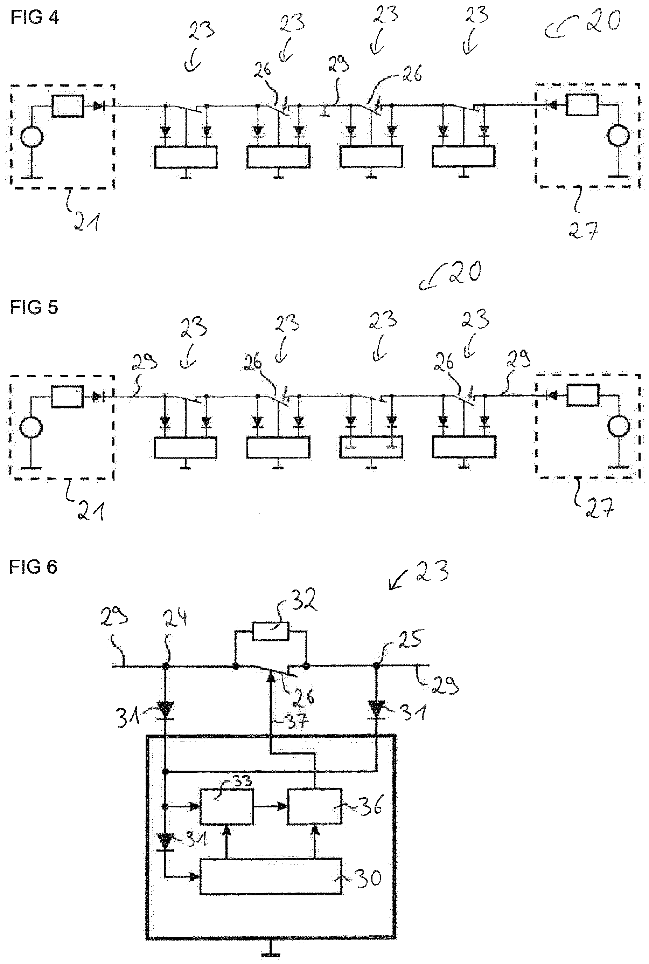

Jede der Verbrauchereinheiten 23 weist einen Schalter 26 auf, welcher zwischen dem jeweiligen ersten Eingang 24 und dem jeweiligen zweiten Eingang 25 angeordnet ist. Die ersten Eingänge 24 und die zweiten Eingänge 25 sind jeweils elektrisch mit einer Diode 31 verbunden. Außerdem ist jede der Verbrauchereinheiten 23 dazu ausgelegt den jeweils zugehörigen Schalter 26 autark anzusteuern. Der Aufbau der Verbrauchereinheiten 23 ist in Figur 6 gezeigt.

Die Verbrauchereinheiten 23 können jeweils einen induktiven Sensor aufweisen. Bei den Sensoren kann es sich um Raddetektoren zur Detektion von Zügen handeln, welche entlang von Gleisen angeordnet sind. Somit können die Versorgungsleitungen 29 zwischen den Verbrauchereinheiten 23 jeweils Längen von mehreren Metern, mehreren hundert Metern oder mehreren Kilometern aufweisen.

In Figur 2 ist das in Figur 1 gezeigte Ausführungsbeispiel gezeigt. Zwischen der zweiten Verbrauchereinheit 23 von links und der dritten Verbrauchereinheit 23 liegt ein Kurzschluss gegen Masse in der Versorgungsleitung 29 vor. Die Verbrauchereinheiten 23 sind dazu ausgelegt die an der Verbrauchereinheit 23 anliegende Spannung zu messen. Dazu wird jeweils die Spannung, welche zwischen einer der Dioden 31 und Masse anliegt, bestimmt. Tritt ein Kurzschluss auf, so steigt der Strom stark an und die Spannung fällt. Die Verbrauchereinheiten 23 sind dazu ausgelegt den jeweils zugehörigen Schalter 26 in Abhängigkeit von der an der jeweiligen Verbrauchereinheit 23 anliegenden Spannung anzusteuern. Durch den Kurzschluss in der Versorgungsleitung 29 fällt die an der zweiten Verbrauchereinheit 23 von links anliegende Spannung unter einen vorgebbaren Minimalwert. Daher wird der zugehörige Schalter 26 geöffnet. Es ist weiter möglich, dass die anliegende Spannung bei mehreren Verbrauchereinheiten 23 unter einen vorgebbaren Minimalwert fällt und dass daher mehrere Schalter 26 geöffnet werden. Beispielsweise wird auch bei der dritten Verbrauchereinheit 23 der zugehörige Schalter 26 aufgrund des Spannungseinbruchs geöffnet. Solange der Kurzschluss in der Versorgungsleitung 29 weiter vorliegt, können somit die dritte Verbrauchereinheit 23 und die vierte Verbrauchereinheit 23 nicht mehr von der Spannungsversorgung 21 mit Spannung versorgt werden.

Durch das Öffnen des Schalters 26 der zweiten Verbrauchereinheit 23 ist der Kurzschluss in der Versorgungsleitung 29 jedoch von der Spannungsversorgung 21 entkoppelt. Daher können die erste Verbrauchereinheit 23 und die zweite Verbrauchereinheit 23 weiter mit Spannung von der Spannungsversorgung 21 versorgt werden. Der hier gezeigte Aufbau des Versorgungssystems 20 ermöglicht somit mit einer einfachen Verbindung zwischen den Verbrauchereinheiten 23 auch im Fall eines Kurzschlusses in einer Versorgungsleitung 29 weiter die Versorgung zumindest einiger der Verbrauchereinheiten 23 mit Spannung durch die Spannungsversorgung 21.

In Figur 3 ist ein weiteres Ausführungsbeispiel des Versorgungssystems 20 gezeigt. Im Unterschied zum in Figur 1 gezeigten Ausführungsbeispiel weist das Versorgungssystem 20 eine weitere Spannungsversorgung 27 mit einer weiteren Spannungsquelle 28 auf. Die weitere Spannungsversorgung 27 weist den gleichen Aufbau wie die Spannungsversorgung 21 auf. Die weitere Spannungsversorgung 27 ist an einer der Spannungsversorgung 21 abgewandten Seite des Versorgungssystems 20 angeordnet. Die Verbrauchereinheiten 23 sind in Serie geschaltet, wobei die Spannungsversorgung 21 an einer ersten Seite der Serienschaltung angeordnet ist und die weitere Spannungsversorgung 27 an einer zweiten Seite der Serienschaltung. Die weitere Spannungsversorgung 27 weist einen Ausgang 34 auf, welcher über eine Versorgungsleitung 29 mit dem zweiten Eingang 25 einer der Verbrauchereinheiten 23 elektrisch verbunden ist.

In Figur 4 ist das in Figur 3 gezeigte Ausführungsbeispiel gezeigt. Zwischen der zweiten Verbrauchereinheit 23 von links und der dritten Verbrauchereinheit 23 liegt ein Kurzschluss gegen Masse in der Versorgungsleitung 29 vor. Nach einem Spannungseinbruch entlang der Versorgungsleitung 29 bleiben die Schalter 26 der zweiten und der dritten Verbrauchereinheit 23 geöffnet. Somit ist der Kurzschluss in der Versorgungsleitung 29 von der Spannungsversorgung 21 und der weiteren Spannungsversorgung 27 entkoppelt. Die erste und die zweite Verbrauchereinheit 23 werden von der Spannungsversorgung 21 weiter mit Spannung versorgt. Die dritte und die vierte Verbrauchereinheit 23 werden von der weiteren Spannungsversorgung 27 weiter mit Spannung versorgt. Das bedeutet, dass alle Verbrauchereinheiten 23 auch bei einem Kurzschluss in einer Versorgungsleitung 29 weiter regulär mit Spannung versorgt werden können.

In Figur 5 ist das in Figur 3 gezeigte Ausführungsbeispiel gezeigt. In der dritten Verbrauchereinheit 23 von links liegt ein Kurzschluss vor. Daher fällt die Spannung entlang der Versorgungsleitung 29, weshalb es zur Öffnung mehrerer Schalter 26 kommen kann. Nach dem Öffnen der Schalter 26 an der zweiten Verbrauchereinheit 23 und der vierten Verbrauchereinheit 23 werden die übrigen Schalter 26 sukzessive wieder geschlossen. Nun können die erste und die zweite Verbrauchereinheit 23 über die Spannungsversorgung 21 weiter mit Spannung versorgt werden. Die vierte Verbrauchereinheit 23 wird über die weitere Spannungsversorgung 27 weiter mit Spannung versorgt. Die fehlerhafte dritte Verbrauchereinheit 23 ist von der Spannungsversorgung 21 und der weiteren Spannungsversorgung 27 entkoppelt. Vorteilhafterweise ermöglicht dieser Aufbau des Versorgungssystems 20 somit, dass lediglich die fehlerhafte Verbrauchereinheit 23 vom Versorgungssystem 20 entkoppelt wird und alle weiteren Verbrauchereinheiten 23 weiter regulär mit Spannung versorgt werden. Dazu wird lediglich jeweils eine Versorgungsleitung 29 zwischen den Spannungsversorgungen 21, 27 und den Verbrauchereinheiten 23 benötigt.

In Figur 6 ist ein Ausführungsbeispiel einer Verbrauchereinheit 23 gezeigt. Die Verbrauchereinheit 23 weist einen ersten Eingang 24 und einen zweiten Eingang 25 auf. Der erste Eingang 24 und der zweite Eingang 25 sind jeweils elektrisch mit einer Versorgungsleitung 29 verbunden. Zwischen dem ersten Eingang 24 und dem zweiten Eingang 25 ist ein Schalter 26 angeordnet. Zum Schalter 26 ist parallel ein Widerstand 32 geschaltet. Bei dem Widerstand 32 handelt es sich um einen Ladewiderstand. Der erste Eingang 24 ist elektrisch mit einer Diode 31 verbunden. Die Diode 31 ist weiter elektrisch mit einer Messeinrichtung 33 und einer weiteren Diode 31 verbunden. Die Messeinrichtung 33 ist dazu ausgelegt die an der Verbrauchereinheit 23 anliegende Spannung zu bestimmen. Der zweite Eingang 25 ist elektrisch mit einer weiteren Diode 31 verbunden. Die weitere Diode 31 ist weiter ebenfalls mit der Messeinrichtung 33 und einer weiteren Diode 31 verbunden. Somit wird in der Messeinrichtung 33 die zwischen der Verbrauchereinheit 23 und Masse anliegende Spannung bestimmt. Die Messeinrichtung 33 ist mit einer Ansteuerungseinheit 36 verbunden. Die Ansteuerungseinheit 36 ist dazu ausgelegt den Schalter 26 anzusteuern. Das bedeutet, dass die Ansteuerungseinheit 36 den Schalter 26 derart ansteuern kann, dass dieser geschlossen oder geöffnet wird. Die Ansteuerungseinheit 36 ist mit dem Schalter 26 über eine Steuerverbindung 37 verbunden. Bei der Steuerverbindung 37 kann es sich um eine mechanische, eine elektrische oder eine drahtlose Verbindung handeln.

Über zwei Dioden 31 in Durchlassrichtung sind der erste Eingang 24 und der zweite Eingang 25 jeweils elektrisch mit einem Energiespeicher 30 der Verbrauchereinheit 23 verbunden. Der Energiespeicher 30 ist mit der Messeinrichtung 33 und der Ansteuerungseinheit 36 verbunden. Außerdem ist der Energiespeicher 30 mit einem elektrischen Verbraucher, wie beispielsweise einen induktiven Sensor, verbunden. Falls die Spannung an beiden Eingängen 24, 25 im Falle einer Störung oder des Öffnens der Schalter 26 von benachbarten Verbrauchereinheiten 23 einbricht, können die Messeinrichtung 33, die Ansteuerungseinheit 36 und der elektrische Verbraucher vom Energiespeicher 30 mit Spannung versorgt werden.

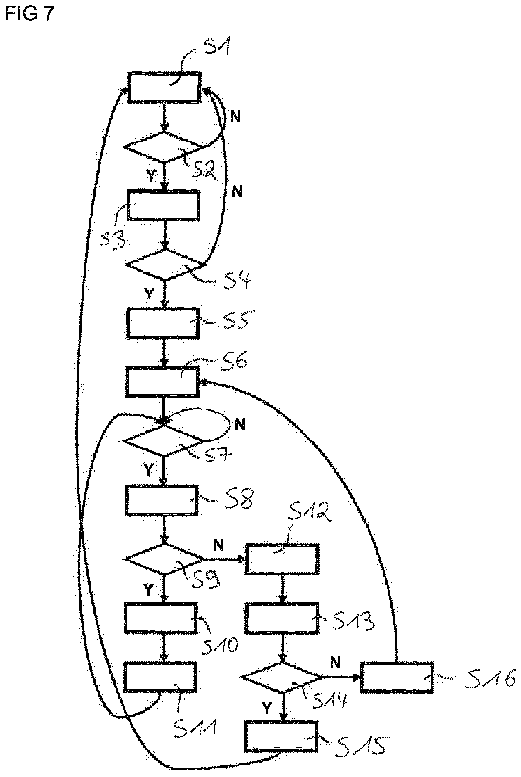

In Verbindung mit Figur 7 ist ein Ausführungsbeispiel des Verfahrens zum Betreiben des Versorgungssystems 20 beschrieben. In einem ersten Schritt S1 wird für jede Verbrauchereinheit 23 die an der Verbrauchereinheit 23 anliegende Spannung von der Messeinrichtung 33 gemessen. In einem zweiten Schritt S2 wird bestimmt, ob die gemessene Spannung unterhalb von einem vorgebbaren Minimalwert liegt. Für den Fall, dass die gemessene Spannung unterhalb des Minimalwertwerts liegt, wird nach einer vorgebbaren Zeitdauer in einem dritten Schritt S3 die anliegende Spannung erneut gemessen. Durch das zweimalige Messen der Spannung wird vermieden, dass ein Schalter 26 bei kurzzeitigen Spannungseinbrüchen im Versorgungssystem 20 bereits geöffnet wird. Für den Fall, dass die gemessene Spannung bereits im ersten Schritt S1 über dem Minimalwert liegt, folgt nach dem zweiten Schritt S2 wieder der erste Schritt S1. Nach dem dritten Schritt S3 wird in einem vierten Schritt S4 erneut bestimmt, ob die im dritten Schritt S3 gemessene Spannung unterhalb des Minimalwerts liegt. Liegt die Spannung nun oberhalb des Minimalwerts, so hat es sich im Schritt S1 beispielsweise um einen kurzfristigen Spannungseinbruch im Versorgungssystem 20 gehandelt. In diesem Fall folgt erneut der Schritt S1. Liegt die Spannung erneut unterhalb des Minimalwerts, so wird in einem fünften Schritt S5 der Schalter 26 geöffnet.

Liegt in einer der Versorgungsleitungen 29 oder in einer der Verbrauchereinheiten 23 eine Störung oder ein Kurzschluss vor, so kann die Spannung im Versorgungssystem 20 zumindest stellenweise stark fallen. Um die intakten Verbrauchereinheiten 23 vor Störungen oder Kurzschlüssen zu schützen, werden die zugehörigen Schalter 26 geöffnet. In einem sechsten Schritt S6 werden die intakten und von der Versorgungsleitung 29 getrennten Verbrauchereinheiten 23 über die jeweils eigenen Energiespeicher 30 mit Spannung versorgt. In einem nächsten Schritt S7 wird nach einer vorgebbaren Zeitdauer die an der Verbrauchereinheit 23 anliegende Spannung gemessen. Liegt die Spannung unterhalb von einem vorgebbaren Schwellwert, so bleibt der Schalter 26 geöffnet und es folgt erneut der Schritt S7. Liegt die Spannung über dem vorgebbaren Schwellwert, so wird in einem nächsten Schritt S8 der Schalter 26 wieder geschlossen. Es ist daher möglich, dass in diesem Fall eine defekte Verbrauchereinheit 23 oder eine defekte Versorgungsleitung 29 wieder an eine intakte Versorgungsleitung 29 angeschlossen wird. In einem nächsten Schritt S9 wird die an der Verbrauchereinheit 23 anliegende Spannung gemessen. Liegt die Spannung unterhalb des vorgebbaren Schwellwerts, so wird der Schalter 26 in einem nächsten Schritt S10 wieder geöffnet. Der Schalter 26 wird nicht nach einer vorgebbaren Zeitdauer wieder geöffnet, sondern instantan, um den möglichen Spannungseinbruch an der Verbrauchereinheit 23 so kurz wie möglich zu halten. Sofern die Störung oder der Kurzschluss noch nicht behoben wurden, kann die an der Verbrauchereinheit 23 anliegende Spannung weiterhin unterhalb des Schwellwerts oder unterhalb des Minimalwerts liegen. In einem nächsten Schritt S11 bleibt der Schalter 26 für eine vorgebbare Zeitdauer geöffnet. Im anschließenden Schritt S7 wird erneut die anliegende Spannung gemessen. Das bedeutet, der Schalter 26 kann im folgenden Schritt S8 wiederholt testweise geschlossen werden. Dabei kann die vorgebbare Zeitdauer in Schritt S11 mit der Zeit größer werden.

Liegt die in Schritt S9 gemessene Spannung oberhalb des Schwellwerts, so bleibt der Schalter 26 in einem nächsten Schritt S12 geschlossen. In einem anschließenden Schritt S13 bleibt der Schalter 26 für eine vorgebbare Zeitdauer geschlossen. In einem nächsten Schritt S14 wird die an der Verbrauchereinheit 23 anliegende Spannung gemessen. Liegt die Spannung unter dem Schwellwert, so wird in einem nächsten Schritt S16 der Schalter 26 wieder geöffnet. Anschließend werden in Schritt S6 die intakten und von der Versorgungsleitung 29 getrennten Verbrauchereinheiten 23 über die jeweils eigenen Energiespeicher 30 mit Spannung versorgt.

Liegt die in Schritt S14 gemessene Spannung über dem Schwellwert, so bleibt der Schalter 26 in einem nächsten Schritt S15 geschlossen. Nach dem Schritt S15 folgt wieder der Schritt S1. Liegt in einer der Verbrauchereinheiten 23 ein Kurzschluss vor, so bleibt der zugehörige Schalter 26 geöffnet. Sobald die Spannung im Versorgungssystem 20 wieder über dem Schwellwert liegt, werden die übrigen Schalter 26 wieder geschlossen und die übrigen Verbrauchereinheiten 23 werden wieder von der Spannungsversorgung 21 und gegebenenfalls von der weiteren Spannungsversorgung 27 mit Spannung versorgt. Liegt in einer der Versorgungsleitungen 29 ein Kurzschluss vor, so bleiben die Schalter 26 der benachbarten zwei Verbrauchereinheiten 23 so lange geöffnet, bis der Kurzschluss behoben ist. Dies wird durch kurzes, testweises Schließen der Schalter 26 der benachbarten zwei Verbrauchereinheiten 23 und eine Spannungsmessung an den zwei Verbrauchereinheiten 23 erreicht. In dieser Zeit werden alle Verbrauchereinheiten 23 von der Spannungsversorgung 21 und gegebenenfalls von der weiteren Spannungsversorgung 27 mit Spannung versorgt. Damit weist das Versorgungssystem 20 einen verbesserten Schutz gegenüber Ausfällen auf.

### Bezugszeichenliste

20: Versorgungssystem
21: Spannungsversorgung
22: Spannungsquelle
23: Verbrauchereinheit
24: erster Eingang
25: zweiter Eingang
26: Schalter
27: weitere Spannungsversorgung
28: weitere Spannungsquelle
29: Versorgungsleitung
30: Energiespeicher
31: Diode
32: Widerstand
33: Messeinrichtung
34: Ausgang
35: Strombegrenzungseinheit
36: Ansteuerungseinheit
37: Steuerverbindung
S1-S16: Schritte

## Patentansprüche

1. Versorgungssystem (20) zur Versorgung mit elektrischer Spannung, das Versorgungssystem (20) umfassend:
- mindestens eine Spannungsversorgung (21), welche eine Spannungsquelle (22) aufweist, und
- mindestens zwei Verbrauchereinheiten (23), wobei
- die Verbrauchereinheiten (23) jeweils einen ersten Eingang (24) und einen zweiten Eingang (25) aufweisen,
- jede der Verbrauchereinheiten (23) einen Schalter (26) aufweist, welcher zwischen dem jeweiligen ersten und dem jeweiligen zweiten Eingang (24, 25) angeordnet ist,
- mindestens eine Verbrauchereinheit (23) elektrisch mit der Spannungsversorgung (21) gekoppelt ist,
- die Verbrauchereinheiten (23) elektrisch in Serie geschaltet sind, und
- jede der Verbrauchereinheiten (23) dazu ausgelegt ist den jeweils zugehörigen Schalter (26) autark anzusteuern.

2. Versorgungssystem (20) gemäß Anspruch 1, bei dem das Versorgungssystem (20) mindestens eine weitere Spannungsversorgung (27) mit einer weiteren Spannungsquelle (28) aufweist.

3. Versorgungssystem (20) gemäß einem der vorherigen Ansprüche, bei dem jeder Schalter (26) ausschließlich durch Informationen der zugehörigen Verbrauchereinheit (23) angesteuert wird.

4. Versorgungssystem (20) gemäß einem der vorherigen Ansprüche, bei dem die Spannungsversorgung (21) eine Strombegrenzung oder eine Leistungsbegrenzung aufweist.

5. Versorgungssystem (20) gemäß einem der vorherigen Ansprüche, bei dem die Verbrauchereinheiten (23) über elektrisch leitfähige Versorgungsleitungen (29) elektrisch in Serie geschaltet sind, wobei zwischen zwei Verbrauchereinheiten (23) jeweils eine Versorgungsleitung (29) angeordnet ist.

6. Versorgungssystem (20) gemäß dem vorherigen Anspruch, bei dem jeweils zwei Verbrauchereinheiten (23) über genau eine Versorgungsleitung (29) elektrisch miteinander verbunden sind.

7. Versorgungssystem (20) gemäß einem der vorherigen Ansprüche, bei dem die Verbrauchereinheiten (23) jeweils einen induktiven Sensor aufweisen.

8. Versorgungssystem (20) gemäß einem der vorherigen Ansprüche, bei dem jede der Verbrauchereinheiten (23) einen Energiespeicher (30) aufweist.

9. Versorgungssystem (20) gemäß einem der vorherigen Ansprüche, bei dem die ersten Eingänge (24) und die zweiten Eingänge (25) elektrisch mit jeweils einer Diode (31) verbunden sind.

10. Versorgungssystem (20) gemäß einem der vorherigen Ansprüche, bei dem parallel zu jedem Schalter (26) ein Widerstand (32) geschaltet ist.

11. Versorgungssystem (20) gemäß einem der vorherigen Ansprüche, bei dem jede der Verbrauchereinheiten (23) eine Messeinrichtung (33) aufweist, welche dazu ausgelegt ist, die an der jeweiligen Verbrauchereinheit (23) anliegende Spannung zu bestimmen.

12. Versorgungssystem (20) gemäß dem vorherigen Anspruch, bei dem jede der Verbrauchereinheiten (23) dazu ausgelegt ist den jeweils zugehörigen Schalter (26) in Abhängigkeit von der an der jeweiligen Verbrauchereinheit (23) anliegenden Spannung anzusteuern.

13. Verfahren zum Betreiben eines Versorgungssystems (20) gemäß einem der Ansprüche 11 oder 12, bei dem für jede Verbrauchereinheit (23) der zugehörige Schalter (26) geöffnet wird, wenn die an der Verbrauchereinheit (23) anliegende Spannung unterhalb von einem vorgebbaren Minimalwert liegt.

14. Verfahren gemäß dem vorherigen Anspruch, bei dem die Öffnung des zugehörigen Schalters (26) nach einer vorgebbaren Zeitdauer erfolgt, wenn die an der Verbrauchereinheit (23) anliegende Spannung unterhalb von einem vorgebbaren Minimalwert liegt.

15. Verfahren gemäß einem der Ansprüche 13 oder 14, bei dem nach dem Öffnen des Schalters (26) der Schalter (26) in vorgebbaren Zeitabständen geschlossen wird, wenn die an der jeweiligen Verbrauchereinheit (23) anliegende Spannung über einem vorgebbaren Schwellwert liegt.
